# EUROPÄISCHE PATENTSCHRIFT

(11) **EP 2 478 721 B1**
(45) Veröffentlichungstag und Bekanntmachung des Hinweises auf die Patenterteilung: **31.10.2018**
(21) Anmeldenummer: 10754517.0
(22) Anmeldetag: 17.09.2010
(51) Int. Cl.: H04W 24/10, H04W 84/18

(54) **FUNKNETZWERK, UMFASSEND FUNKTEILNEHMER DIE IN EINEM DIAGNOSEMODUS KANALMESSUNGEN AUSFÜHREN**
RADIO NETWORK COMPRISING RADIO CLIENTS THAT PERFORM CHANNEL MEASUREMENTS IN A DIAGNOSTIC MODE
RÉSEAU RADIO COMPORTANT DES DISPOSITIFS UTILISATEURS RADIO EXÉCUTANT DES MESURES DE CANAUX EN MODE DIAGNOSTIC

(30) Priorität: 18.09.2009 DE 102009041835
(43) Veröffentlichungstag der Anmeldung: 25.07.2012
(73) Patentinhaber: Phoenix Contact GmbH & Co. KG, 32825 Blomberg (DE)
(72) Erfinder: HAKEMEYER, Frank, 32805 Horn-Bad Meinberg (DE); WITTE, Stefan, 32425 Minden (DE)
(74) Vertreter: Michalski Hüttermann & Partner Patentanwälte mbB
(86) Internationale Anmeldenummer: PCT/EP2010/063719
(87) Internationale Veröffentlichungsnummer: WO 2011/033076

(56) Entgegenhaltungen:
- EP-A2- 1 672 839
- WO-A2-03/081373
- US-A1- 2004 037 247
- US-A1- 2006 013 172
- US-A1- 2007 086 378

## Beschreibung

Netzwerke, die mehrere Teilnehmer aufweisen, die miteinander kommunizieren können, sind allgemein bekannt. Die Teilnehmer können innerhalb des Netzwerkes in verschiedenen logischen Strukturen angeordnet sein, wobei es bekannt ist, die Teilnehmer in Form einer Baumstruktur anzuordnen. In einer Baumstruktur steht ein Teilnehmer an der Spitze, die übrigen Teilnehmer schließen sich an diesen Teilnehmer an. Der an der Spitze der Baumstruktur stehende Teilnehmer ist Teil einer obersten, ersten Netzwerkebene, die unmittelbar mit diesem Teilnehmer verbundenen Teilnehmer gehören zu einer der ersten Netzwerkebene untergeordneten zweiten Netzwerkebene, die sich an die letzteren Teilnehmer unmittelbar anschließenden Teilnehmer sind Teil ein dritten, der zweiten Netzwerkebene untergeordnete Netzwerkebene, usw. In einer Baumstruktur sind nur Verbindungen zwischen Teilnehmern benachbarter Netzwerkebenen erlaubt. Verbindungen innerhalb einer Netzwerkebene sind verboten. Des Weiteren ist ein Teilnehmer, abgesehen von dem Teilnehmer an der Spitze der Baumstruktur, genau mit einem Teilnehmer einer benachbarten übergeordneten Netzwerkebene verbunden. Des Weiteren können mehrere Teilnehmer einer untergeordneten Netzwerkebene mit einem einzelnen Teilnehmer der benachbarten übergeordneten Netzwerkebene verbunden sein.

Die Teilnehmer eines Netzwerkes werden auch als "Netzwerkknoten" oder "Knoten" bezeichnet. Des Weiteren unterscheidet man, je nach Funktion des Teilnehmers, zwischen Master-Teilnehmer, Repeaterslave-Teilnehmer und Slave-Teilnehmer. Der Master-Teilnehmer bildet den zentralen Punkt des Netzwerkes. Netzwerkspezifische Funktionen werden durch den Master-Teilnehmer durchgeführt. Ohne einen Master-Teilnehmer ist das Netzwerk nicht funktionsfähig. In einer Baumstruktur ist der Teilnehmer an der Spitze ein Master-Teilnehmer. Ein Repeaterslave-Teilnehmer hat die Funktion, Nachrichten zwischen benachbarten Teilnehmern weiterzuleiten. Ein Slave-Teilnehmer leitet keine Nachrichten weiter. Slave-Teilnehmer bilden immer Endpunkte des Netzwerkes.

Aus dem Stand der Technik sind Funknetzwerke wie beispielsweise Wireless LAN oder WLAN in verschiedenen Ausgestaltungen gut bekannt. Genannte Funknetzwerke kommunizieren in der Regel nach dem Standard IEEE 802.11. Um zumindest abschätzen zu können, welche Qualität die Kommunikation innerhalb des Funknetzwerkes zwischen den Funkteilnehmern des Funknetzwerkes besitzt, ist es bekannt, bei einem Funkteilnehmer das sogenannte RSSI-Signal (Receive Signal Strength Indicator) zu messen. Das RSSI-Signal ist ein Maß für die Feldstärke der Funkwellen am Ort des Funkteilnehmers. Der Wert des RSSI-Signals ist abhängig von der Ausgangsleistung des die Funkwellen aussendenden Senders, der Streckendämpfung zwischen Sender und Empfänger sowie der Einstrahlung weiterer Funkwellen auf derselben Frequenz oder im selben Frequenzband.

Die Ausgangsleistung ist üblicherweise eine konstante Größe, die Streckendämpfung hingegen variiert in hohem Maße mit der Frequenz, der Zeit und dem Ort. Der Einfluss der Frequenz kommt insbesondere bei Frequenzsprung-Netzwerk zum Tragen, d.h., bei Funknetzwerken, bei denen die Funkteilnehmer laufend ihre Sende- und Empfangsfrequenz ändern. Der Einfluss der Zeit und des Ortes ist bedingt durch sich verändernde Umfelder. Die Ausstrahlung von anderen Funkquellen im selben Frequenzband ist als weiterer Einfluss zu berücksichtigen. Dies hat zur Folge, dass das RSSI-Signal starken Schwankungen unterworfen ist. Als eindimensionale Größe ist das RSSI-Signal häufig ein Mittelwert über alle Sprungfrequenzen und einen Zeitraum x.

Aus der US 2007/0086378 A1 ist ein Funknetzwerk bekannt, bei dem eine Mehrzahl Funkteilnehmer RSSI-Messungen jeweils auf einem Kanal vornehmen und an einen einzelnen Funkteilnehmer übermitteln. Ein Funkteilnehmer scannt jeweils einen Kanal und mehrere Kanäle werden von mehreren Funkteilnehmern gemessen. Messung und Übermittlung der Messergebnisse können auf unterschiedlichen Frequenzen erfolgen.

Auch aus der EP 1 672 839 A2 ist bekannt, in einem Funknetzwerk Signalstärke-Messungen auf mehreren Kanälen mit einem Funkteilnehmer durchzuführen und entsprechend an einen anderen Funkteilnehmer zu übermitteln.

Die US 2006/0178124 A1 betrifft ein Gerät und ein Verfahren zur Überwachung und Anzeige von über die Luftschnittstelle empfangener Energie. Dazu werden mit einem einzelnen Gerät Signalpegel an verschiedenen Stellen gemessen und die Signalpegel in einer Karte dargestellt. Das empfangene Signal wird analysiert, um daraus darzustellende Informationen zu gewinnen, beispielsweise um das Signal einer Übertragungstechnologie zuzuordnen

Die US 2004/0037247 A1 beschreibt ebenfalls ein einzelnes Gerät zur Spektrumsanalyse. Dazu werden unterschiedliche Kurven gemeinsam in einem Display angezeigt.

Der Erfindung liegt die Aufgabe zugrunde, ein Funknetzwerk zu schaffen, welches eine verbesserte und erweiterte Erfassung von Feldstärken von Funkwellen innerhalb eines Funknetzwerkes ermöglicht.

Die Aufgabe wird gelöst durch ein Funknetzwerk gemäß dem unabhängigen Anspruch 1 sowie durch ein Verfahren gemäß dem unabhängigen Anspruch 10.

Vorteilhafte Ausgestaltungen der Erfindung sind in den Unteransprüchen angegeben.

Die Ausführungsformen und/oder Beispiele der folgenden Beschreibung, die nicht durch den Gegenstand der Ansprüche abgedeckt sind, werden nicht als Teil der vorliegenden Erfindung angesehen.

Das erfindungsgemäße Funknetzwerk umfasst einen ersten Funkteilnehmer und eine Mehrzahl zweite Funkteilnehmer, wobei der erste Funkteilnehmer und jeder zweite Funkteilnehmer innerhalb eines Frequenzbandes auf mindestens zwei Kanälen mittels Funkwellen miteinander kommunizieren können, wobei jeder zweite Funkteilnehmer derart eingerichtet ist, dass dieser in einen Diagnosemodus schaltbar ist, wobei in dem Diagnosemodus der zweite Funkteilnehmer mindestens zwei Kanäle innerhalb des Frequenzbandes durchläuft, und auf dem jeweiligen Kanal ein Messsignal aufnimmt, wobei das Messsignal die Stärke einer vom zweiten Funkteilnehmer empfangenen Funkwelle wiedergibt. Weiter ist das Funknetzwerk derart eingerichtet, dass jeder zweite Funkteilnehmer die aufgenommenen frequenzabhängigen Messsignale an den ersten Funkteilnehmer kommuniziert, der erste Funkteilnehmer weist eine Anzeigeeinheit auf, wobei mittels der Anzeigeeinheit die frequenzabhängigen Messsignale der zweiten Funkteilnehmer darstellbar sind, und der erste Funkteilnehmer ist derart eingerichtet, dass die Messsignale verschiedener zweiter Funkteilnehmer überlagert dargestellt werden können.
Unter einem "Kanal" ist hier ein schmalbandiges Frequenzband um eine Trägerfrequenz zu verstehen, auf dem der erste und der mindestens eine zweite Funkteilnehmer miteinander kommunizieren können.
Das vom mindestens einen zweiten Funkteilnehmer aufgenommene Messsignal erlaubt es, für verschiedene Kanäle festzustellen, wie gut die Qualität der Übertragung auf dem jeweiligen Kanal ist. Die Kommunikation kann unmittelbar zwischen dem ersten Funkteilnehmer und dem mindestens einen zweiten Funkteilnehmer erfolgen, es können aber auch weitere zweite Funkteilnehmer zwischengeschaltet sein, so dass die Kommunikation mittelbar über die zwischengeschalteten zweiten Funkteilnehmer erfolgt. Des weiteren können erster Funkteilnehmer und zweite Funkteilnehmer auf einem gemeinsamen Kanal oder auf unterschiedlichen Kanälen kommunizieren. Beispielsweise kommuniziert der erste Funkteilnehmer mit einem zweiten Funkteilnehmer auf einem Kanal 1, dieser zweite Funkteilnehmer kommuniziert mit einem weiteren zweiten Funkteilnehmer auf einem sich vom Kanal 1 unterscheidenden Kanal 2.

Das erfindungsgemäße Funknetzwerk ermöglicht es, am Ort des mindestens einen zweiten Funkteilnehmers für verschiedene Kanäle ein Messsignal aufzunehmen, das die Stärke einer vom zweiten Funkteilnehmer empfangenen Funkwelle wiedergibt. Dieses Messsignal kann sowohl ein momentanes Messsignal sein, oder aber auch ein zeitlich gemitteltes Messsignal. Ebenfalls ist es möglich, das Messsignal nicht nur kanalabhängig, sondern auch zeitabhängig aufzunehmen. Auf diese Weise lassen sich umfassende Informationen ermitteln, die für die Beurteilung der Qualität der Funkverbindungen innerhalb des Funknetzwerkes genutzt werden können. Dadurch, dass der mindestens eine zweite Funkteilnehmer selbst für die Aufnahme derartiger Messsignale verwendet wird, ist es möglich, die Aufnahme derartiger Messsignale mit geringem oder ohne zusätzlichen Hardware-Aufwand zu betreiben.

Die Kommunikation der aufgenommenen kanalabhängigen und gegebenenfalls auch zeitabhängigen Messsignale durch den mindestens einen zweiten Funkteilnehmer an den ersten Teilnehmer bewirkt, dass am ersten Funkteilnehmer die Messsignale aller zweiten Funkteilnehmer vorliegen. Dies ermöglicht einen einfachen Abruf der Messsignale, einen Vergleich der Messsignale unterschiedlicher zweiter Funkteilnehmer, und falls gewünscht, die Einleitung von Maßnahmen.

Die mindestens zwei Kanäle, auf denen eine Messung durchgeführt wird, können Kanäle sein, auf denen das Netzwerk kommuniziert, oder aber auch Kanäle sein, die nicht für die Kommunikation verwendet werden. Eine Kombination ist ebenfalls möglich.

In einer vorteilhaften Ausgestaltung ist der mindestens eine zweite Funkteilnehmer derart eingerichtet, dass er von einem Kommunikationsmodus in den Diagnosemodus und wieder zurück in den Kommunikationsmodus schaltbar ist, wobei der mindestens eine zweite Teilnehmer in dem Kommunikationsmodus mit Funkteilnehmern kommunizieren kann, und im Diagnosemodus die Kommunikation mit anderen Funkteilnehmern ausgesetzt ist.

Die Trennung zwischen Kommunikationsmodus und Diagnosemodus ermöglicht es, dass der mindestens eine zweite Funkteilnehmer zumindest einen Teil der Hardware-Komponenten sowohl für den Kommunikationsmodus als auch den Diagnosemodus einsetzt. Das doppelte Vorsehen von Hardware-Komponenten, wie beispielsweise Antennen, Sendeeinheiten, Empfangseinheiten, Steuer- und Auswerteeinrichtungen werden auf diese Weise vermieden. Der Hardware-Aufwand kann auf diese Weise gering gehalten werden.

Die von mindestens einen zweiten Funkteilnehmer aufgenommenen Messsignale können insbesondere auch vom Funknetzwerk genutzt werden, um sich zu optimieren. Beispielsweise können die von dem mindestens einen zweiten Funkteilnehmer aufgenommenen Messsignale dahingehend analysiert werden, ob es fremde Sendequellen gibt, die den Funkverkehr innerhalb des Funknetzwerkes stören könnten. In einer vorteilhaften Ausgestaltung des Funknetzwerkes können beispielsweise auf Grundlage der aufgenommenen kanalabhängigen Messsignale ein oder mehrere Kanäle für die Kommunikation zwischen den Funkteilnehmern gesperrt werden. Auf diese Weise kann verhindert werden, dass das Funknetzwerk auf Kanälen kommuniziert, die durch die Fremdsendequelle gestört werden. Dies ermöglicht die Koexistenz des Funknetzwerkes mit anderen Sendern. Eine solche Sperrung einzelner Kanäle kann global für das gesamte Funknetzwerk geschehen, oder aber auch nur lokal für die betroffenen Funkteilnehmer des Funknetzwerkes.

Der erste Funkteilnehmer ist vorzugsweise ein Master-Teilnehmer. Insbesondere können durch den Master-Teilnehmer die Kanäle festgelegt werden, die innerhalb des Funknetzwerkes für die Kommunikation verwendet werden, und durch den Master-Teilnehmer Kanäle gesperrt werden, die für eine Kommunikation als ungeeignet erkannt wurden.

Nachfolgend wird die Erfindung unter Bezugnahme auf die anliegenden Zeichnungen anhand bevorzugter Ausführungsformen näher erläutert.

Es zeigt:
- Fig. 1: eine schematische Darstellung einer Ausführungsform eines erfindungsgemäßen Funknetzwerkes, und
- Fig. 2: eine beispielhafte Darstellung eines von einem zweiten Funkteilnehmer des in Fig. 1 dargestellten Funknetzwerkes aufgenommenen Messsignals.

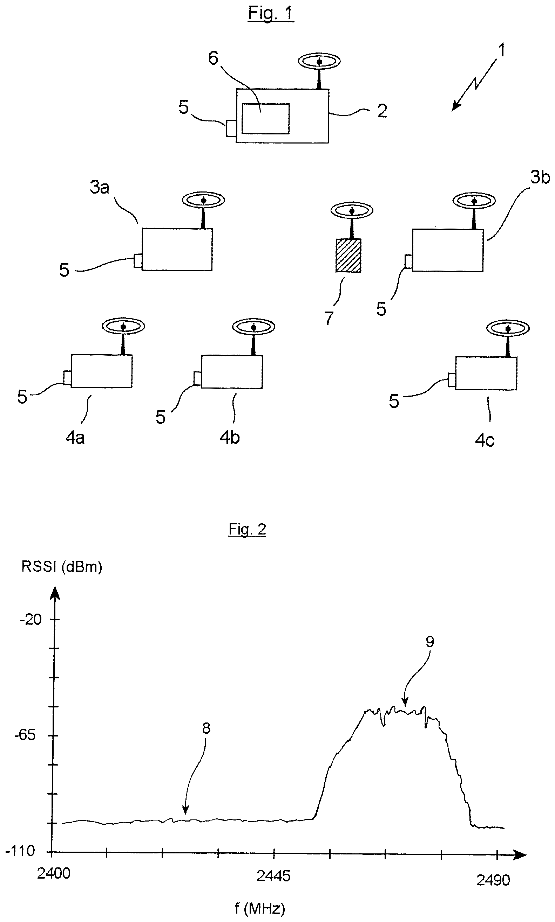

Die Fig. 1 zeigt in einer schematischen Darstellung eine Ausführungsform eines erfindungsgemäßen Funknetzwerkes.

Das Funknetzwerk 1 umfasst einen ersten Funkteilnehmer 2 und insgesamt fünf zweite Funkteilnehmer 3a, 3b, 4a, 4b, 4c. Das Funknetzwerk 1 ist in Form einer Baumstruktur strukturiert, wobei der erste Teilnehmer 2 sich an der Spitze in einer ersten Netzwerkebene der Baumstruktur 1 befindet, zwei zweite Teilnehmer 3a, 3b sich in einer zweiten, der ersten Netzwerkebene benachbarten untergeordneten Netzwerkebene befinden, und sich die letzten drei zweiten Teilnehmer 4a, 4b und 4c in einer dritten, der zweiten Netzwerkebene untergeordneten benachbarten Netzwerkebene befinden. Eine Kommunikation zwischen den Teilnehmern des Funknetzwerkes 1 kann zwischen dem ersten Teilnehmer 2 und dem zweiten Teilnehmern 3a, zwischen dem ersten Teilnehmer 2 und dem zweiten Teilnehmern 3b, zwischen dem zweiten Teilnehmer 3b und dem zweiten Teilnehmer 4c, zwischen dem zweiten Teilnehmer 3a und dem zweiten Teilnehmer 4a, sowie zwischen dem zweiten Teilnehmer 3a und dem zweiten Teilnehmer 4b stattfinden. Eine Kommunikation zwischen beispielsweise dem ersten Teilnehmer 2 und dem zweiten Teilnehmer 4a erfolgt mittelbar über den zweiten Teilnehmer 3a. Die Kommunikation zwischen beispielsweise dem ersten Teilnehmer 2 und dem zweiten Teilnehmer 3a ist unmittelbar.

Die Anzahl der zweiten Funkteilnehmer 3a, 3b, 4a, 4b, 4c und die unterschiedliche Anordnung in den verschiedenen Netzwerkebenen ist lediglich beispielhaft. Es können beispielsweise weitere Netzwerkebenen und weitere zweite Funkteilnehmer im Funknetzwerk 1 integriert sein.

Das Funknetzwerk 1 ist derart eingerichtet, dass die Funkteilnehmer 2, 3a, 3b, 4a, 4b, 4c innerhalb eines Frequenzbandes auf mindestens zwei Kanälen mittels Funkwellen miteinander kommunizieren können. Beispielsweise kann ein Frequenzband 2400 MHz bis 2490 MHz vorgesehen sein, auf das gleichmäßig 50 Kanäle aufgeteilt sind. Ein Kanal ist als ein im Vergleich zum genannten Frequenzband um eine Trägerfrequenz schmal ausgebildetes Frequenzband definiert. Aufgrund der mehreren dem Funknetzwerk 1 zur Verfügung stehenden Kanäle können einzelne Paare von Funkteilnehmern auf unterschiedlichen Kanälen kommunizieren oder zwecks Kommunikation auf einen anderen Kanal wechseln. Dies ermöglicht es beispielsweise innerhalb des Netzwerkes 1 zu verhindern, dass zwei Paare von Funkteilnehmern auf dem gleichen Kanal kommunizieren und sich gegenseitig stören. Des Weiteren kann auf diese Weise verhindert werden, dass die Kommunikation innerhalb des Netzwerkes 1 im Falle eines oder mehrerer gestörter Kanäle, beispielsweise durch einen Fremdsender oder durch örtliche Gegebenheiten, vollständig blockiert ist.

Der erste Teilnehmer 2 ist als Master-Teilnehmer ausgebildet. Der erste Teilnehmer 2 ist der zentrale Punkt des Netzwerkes 1 und führt netzwerkspezifische Funktionen aus. Die mit dem ersten Teilnehmer 2 unmittelbar verbundenen zweiten Teilnehmer 3a, 3b sind als Repeaterslave-Teilnehmer ausgeführt. Die Funktion der Repeaterslave-Teilnehmer ist insbesondere, Nachrichten zwischen den Netzwerkebenen weiterzuleiten. Die mit den zweiten Teilnehmern 3a, 3b der zweiten Netzwerkebene verbundenen Teilnehmer 4a, 4b, 4c der dritten Netzwerkebene sind als Slave-Teilnehmer ausgebildet.

Das Netzwerk 1 ist derart eingerichtet, dass mindestens einer der zweiten Funkteilnehmer 3a, 3b, 4a, 4b, 4c in einen Diagnosemodus schaltbar ist, wobei in dem Diagnosemodus der mindestens eine zweite Funkteilnehmer 3a, 3b, 4a, 4b, 4c mindestens zwei Kanäle innerhalb des Frequenzbandes durchläuft, und auf dem jeweiligen Kanal kanalabhängig und/oder zeitabhängig ein Messsignal aufnimmt, wobei das Messsignal die Stärke einer vom zweiten Funkteilnehmer 3a, 3b, 4a, 4b, 4c empfangenen Funkwelle wiedergibt.

Die Schaltung in den Diagnosemodus wird vorzugsweise durch den ersten Funkteilnehmer 2 initiiert. Alternativ kann die Schaltung in den Diagnosemodus durch ein lokales Event, beispielsweise durch Drücken eines Schalters, oder durch eine überlagerte Applikation initiiert werden. Des Weiteren können in diesem Ausführungsbeispiel sämtliche zweite Funkteilnehmer 3a, 3b, 4a, 4b, 4c in den Diagnosemodus geschaltet werden. Insbesondere kann das Umschalten der zweiten Funkteilnehmer 3a, 3b, 4a, 4b, 4c in den Diagnosemodus aus einem Kommunikationsmodus erfolgen, indem der Funkteilnehmer mit den anderen Funkteilnehmern kommunizieren kann. Nach Ablauf einer festgelegten Zeit schalten die zweiten Funkteilnehmer 3a, 3b, 4a, 4b, 4c aus dem Diagnosemodus zurück in den Kommunikationsmodus. Es erfolgt eine neue Anmeldung im Netzwerk 1. Es ist möglich, nur einen einzelnen zweiten Funkteilnehmer 3a, 3b, 4a, 4b, 4c, mehrere oder alle zweite Funkteilnehmer 3a, 3b, 4a, 4b, 4c zu schalten, wobei sich die Diagnosemodi zweiter Funkteilnehmer 3a, 3b, 4a, 4b, 4c zeitlich überlappen können.

Das Messsignal ist in diesem Ausführungsbeispiel ein RSSI-Signal. Die zweiten Funkteilnehmer 3a, 3b, 4a, 4b, 4c sind derart eingerichtet, dass im Diagnosemodus die mindestens zwei Kanäle einmal oder mehrmals durchlaufen werden. Der Durchlauf kann sich über das gesamte Frequenzband oder über einen Abschnitt erstrecken, oder aber sich auf die Kanäle beschränken, die von dem Netzwerk 1 für die Kommunikation verwendet werden. Des Weiteren können sich die Kanäle, die im Diagnosemodus durchlaufen werden, auf einen Teil der im Netzwerk 1 für die Kommunikation verwendeten Kanäle beschränken. Die Messsignale werden in einem Speicher des jeweiligen zweiten Funkteilnehmers 3a, 3b, 4a, 4b, 4c abgelegt.

Nach Aufnahme der Messsignale werden die aufgenommenen Messsignale an den ersten Funkteilnehmer 2 kommuniziert. Zu diesem Zweck kehrt der zweite Funkteilnehmer nach der Messung aus dem Diagnosemodus in den Kommunikationsmodus zurück, in diesem der zweite Funkteilnehmer dann die Messsignale an den ersten Funkteilnehmer 2 kommuniziert.

Der erste Funkteilnehmer 2 weist eine Anzeigeeinheit 6 auf, wobei mittels der Anzeigeeinheit 6 die frequenzabhängigen Messsignale eines zweiten Funkteilnehmers 3a, 3b, 4a, 4b, 4c darstellbar sind. Eine solche Anzeigeeinheit 6 kann beispielsweise als Display ausgeführt sein. Insbesondere kann der erste Teilnehmer 2 derart eingerichtet sein, dass die Messsignale verschiedener zweiter Funkteilnehmer 3a, 3b, 4a, 4b, 4c überlagert dargestellt werden können.

Des Weiteren umfassen in diesem Ausführungsbeispiel sowohl der erste Teilnehmer 2 als auch die zweiten Teilnehmer 3a, 3b, 4a, 4b, 4c eine Schnittstelle 5, über die die aufgenommenen Messsignale abgreifbar sind, beispielsweise durch Anschluss einer geeigneten Anzeigeeinheit, einen Laptop oder einem sonstigen Diagnosetool.

In diesem Ausführungsbeispiel ist das Funknetzwerk 1 derart eingerichtet, dass auf Grundlage der aufgenommenen frequenzabhängigen Messsignale ein oder mehrere Kanäle für die Kommunikation zwischen den Funkteilnehmern 2, 3a, 3b, 4a, 4b, 4c gesperrt werden können. Dies kann beispielsweise dann erfolgen, wenn ein fremder Sender 7 auf einen oder mehreren Kanälen sendet, die ebenfalls vom Funknetzwerk 1 verwendet werden.

Der fremde Sender 7 ist beispielsweise ein WLAN, der im Frequenzband von 2450 bis 2470 MHz sendet. Von einem zweiten Funkteilnehmer 3a, 3b, 4a, 4b, 4c in einem Diagnosemodus über das gesamte Frequenzband aufgenommene Messsignale 8 erfassen diese Aktivität 9 des fremden Senders 7, siehe Fig. 2. Zeigen von allen zweiten Funkteilnehmern 3a, 3b, 4a, 4b, 4c aufgenommene Messsignale diese Störung in dem Frequenzbereich 2450 bis 2480 MHz liegende Störung, so kann diese Information dazu benutzt werden, diesen Frequenzbereich von der Nutzung durch das Netzwerk 1 auszuschließen. Auf diese Weise kann beispielsweise die Koexistenz des Netzwerkes 1 mit einem oder auch mehreren fremden Sendern 7 verbessert werden.

### Bezugszeichenliste

| | |
|---|---|
| Netzwerk | 1 |
| Erster Teilnehmer | 2 |
| Zweiter Teilnehmer | 3a, 3b, 4a, 4b, 4c |
| Schnittstelle | 5 |
| Anzeigeeinheit | 6 |
| Fremder Sender | 7 |
| Messsignale | 8 |
| Aktivität des fremden Senders | 9 |
| | 2 |

## Patentansprüche

1. Funknetzwerk (1), umfassend einen ersten Funkteilnehmer (2) und eine Mehrzahl zweiter Funkteilnehmer (3a, 3b, 4a, 4b, 4c), wobei der erste Funkteilnehmer (2) und jeder zweite Funkteilnehmer (3a, 3b, 4a, 4b, 4c) innerhalb eines Frequenzbandes auf mindestens zwei Kanälen mittels Funkwellen miteinander kommunizieren können, wobei jeder zweite Funkteilnehmer (3a, 3b, 4a, 4b, 4c) derart eingerichtet ist, dass dieser in einen Diagnosemodus schaltbar ist, wobei in dem Diagnosemodus der zweite Funkteilnehmer (3a, 3b, 4a, 4b, 4c) mindestens zwei Kanäle innerhalb des Frequenzbandes durchläuft, und auf dem jeweiligen Kanal ein Messsignal aufnimmt, wobei das Messsignal die Stärke einer vom zweiten Funkteilnehmer (3a, 3b, 4a, 4b, 4c) empfangenen Funkwelle wiedergibt, **dadurch gekennzeichnet, dass**
das Funknetzwerk (1) derart eingerichtet ist, dass jeder zweite Funkteilnehmer (3a, 3b, 4a, 4b, 4c) die aufgenommenen frequenzabhängigen Messsignale an den ersten Funkteilnehmer (2) kommuniziert,
der erste Funkteilnehmer (2) eine Anzeigeeinheit (6) aufweist, wobei mittels der Anzeigeeinheit (6) die frequenzabhängigen Messsignale der zweiten Funkteilnehmer (3a, 3b, 4a, 4b, 4c) darstellbar sind, und
der erste Funkteilnehmer (2) derart eingerichtet ist, dass die Messsignale verschiedener zweiter Funkteilnehmer (3a, 3b, 4a, 4b, 4c) überlagert dargestellt werden können.

2. Funknetzwerk (1) nach Anspruch 1, wobei jeder zweite Funkteilnehmer (3a, 3b, 4a, 4b, 4c) derart eingerichtet ist, dass er von einem Kommunikationsmodus in den Diagnosemodus und wieder zurück in den Kommunikationsmodus schaltbar ist, wobei jeder zweite Funkteilnehmer (3a, 3b, 4a, 4b, 4c) in dem Kommunikationsmodus mit Funkteilnehmern (2, 3a, 3b, 4a, 4b, 4c) kommunizieren kann, und im Diagnosemodus die Kommunikation mit anderen Funkteilnehmern (2, 3a, 3b, 4a, 4b, 4c)ausgesetzt ist.

3. Funknetzwerk (1) nach Anspruch 2, wobei jeder zweite Funkteilnehmer (3a, 3b, 4a, 4b, 4c) derart eingerichtet ist, dass er nach Ablauf einer festgelegten Zeit aus dem Diagnosemodus in den Kommunikationsmodus zurück schaltet.

4. Funknetzwerk (1) nach einem der vorhergehenden Ansprüche, wobei jeder zweite Funkteilnehmer (3a, 3b, 4a, 4b, 4c) derart eingerichtet ist, dass im Diagnosemodus die mindestens zwei Kanäle mehrmals durchlaufen werden.

5. Funknetzwerk (1) nach einem der vorhergehenden Ansprüche, wobei das Messsignal ein Receive Signal Strength Indicator-Signal, RSSI-Signal, ist.

6. Funknetzwerk (1) nach Anspruch 2, derart eingerichtet, dass jeder zweite Funkteilnehmer (3a, 3b, 4a, 4b, 4c) in den Kommunikationsmodus schaltet und im Kommunikationsmodus die Messsignale an den ersten Funkteilnehmer (2) kommuniziert.

7. Funknetzwerk (1) nach einem der vorhergehenden Ansprüche, wobei der erste Funkteilnehmer (2) und/oder mindestens ein zweiter Funkteilnehmer (3a, 3b, 4a, 4b, 4c) eine Schnittstelle (5) aufweist, über die die aufgenommenen Messsignale abgreifbar sind.

8. Funknetzwerk (1) nach einem der vorhergehenden Ansprüche, wobei der erste Funkteilnehmer (2) ein Master-Teilnehmer ist, und jeder zweite Funkteilnehmer (3a, 3b, 4a, 4b, 4c) ein Repeaterslave-Teilnehmer oder ein Slave-Teilnehmer ist.

9. Funknetzwerk (1) nach einem der vorhergehenden Ansprüche, wobei das Funknetzwerk (1) in Form einer Baumstruktur strukturiert ist.

10. Verfahren zur Messung von Signalstärken einer Funkwelle in einem Frequenzband in einem Funknetzwerk (1), umfassend einen ersten Funkteilnehmer (2) und eine Mehrzahl zweiter Funkteilnehmer (3a, 3b, 4a, 4b, 4c), wobei der erste Funkteilnehmer (2) und jeder zweite Funkteilnehmer (3a, 3b, 4a, 4b, 4c) innerhalb eines Frequenzbandes auf mindestens zwei Kanälen mittels Funkwellen miteinander kommunizieren können, wobei jeder zweite Funkteilnehmer (3a, 3b, 4a, 4b, 4c) in einen Diagnosemodus schaltbar ist, wobei in dem Diagnosemodus der zweite Funkteilnehmer (3a, 3b, 4a, 4b, 4c) mindestens zwei Kanäle innerhalb des Frequenzbandes durchläuft, und auf dem jeweiligen Kanal ein Messsignal aufnimmt, wobei das Messsignal die Stärke einer vom zweiten Funkteilnehmer (3a, 3b, 4a, 4b, 4c) empfangenen Funkwelle wiedergibt,
**dadurch gekennzeichnet, dass**
jeder zweite Funkteilnehmer (3a, 3b, 4a, 4b, 4c) die aufgenommenen frequenzabhängigen Messsignale an den ersten Funkteilnehmer (2) kommuniziert,
der erste Funkteilnehmer (2) eine Anzeigeeinheit (6) aufweist und mittels der Anzeigeeinheit (6) die frequenzabhängigen Messsignale der zweiten Funkteilnehmer (3a, 3b, 4a, 4b, 4c) dargestellt werden, wobei
Messsignale verschiedener zweiter Funkteilnehmer (3a, 3b, 4a, 4b, 4c) überlagert dargestellt werden.

11. Verfahren nach Anspruch 10, wobei jeder zweite Funkteilnehmer (3a, 3b, 4a, 4b, 4c) von einem Kommunikationsmodus in den Diagnosemodus und wieder zurück in den Kommunikationsmodus schaltet, wobei jeder zweite Funkteilnehmer (3a, 3b, 4a, 4b, 4c) in dem Kommunikationsmodus mit Funkteilnehmern (2, 3a, 3b, 4a, 4b, 4c) kommuniziert, und im Diagnosemodus die Kommunikation mit anderen Funkteilnehmern (2, 3a, 3b, 4a, 4b, 4c)ausgesetzt ist.

12. Verfahren nach Anspruch 11, wobei jeder zweite Funkteilnehmer (3a, 3b, 4a, 4b, 4c) nach Ablauf einer festgelegten Zeit aus dem Diagnosemodus in den Kommunikationsmodus zurück schaltet.

13. Verfahren nach einem der Ansprüche 10 bis 13, wobei jeder zweite Funkteilnehmer (3a, 3b, 4a, 4b, 4c) im Diagnosemodus die zwei Kanäle mehrmals durchläuft.

14. Verfahren nach Anspruch 11, wobei jeder zweite Funkteilnehmer (3a, 3b, 4a, 4b, 4c) in den Kommunikationsmodus schaltet und im Kommunikationsmodus die Messsignale an den ersten Funkteilnehmer (2) kommuniziert.

## Claims

1. A radio network (1) comprising a first radio client (2) and a plurality of second radio clients (3a, 3b, 4a, 4b, 4c), wherein the first radio client (2) and each second radio client (3a, 3b, 4a, 4b, 4c) can communicate with one another within a frequency band on at least two channels by means of radio waves, wherein each second radio client (3a, 3b, 4a, 4b, 4c) is configured in such a way that it can be switched into a diagnostic mode, wherein in the diagnostic mode the second radio client (3a, 3b, 4a, 4b, 4c) runs through at least two channels within the frequency band and receives a measurement signal on the respective channels, wherein the measurement signal reflects the strength of a radio wave received from the second radio client (3a, 3b, 4a, 4b, 4c), **characterised in that**
the radio network (1) is configured in such a way that each second radio client (3a, 3b, 4a, 4b, 4c) communicates the received frequency-dependent measurement signals to the first radio client (2),
the first radio client (2) comprises a display unit (6), wherein the frequency-dependent measurement signals of the second radio clients (3a, 3b, 4a, 4b, 4c) can be displayed by means of the display unit (6), and
the first radio client (2) is configured in such a way that the measurement signals of different second radio clients (3a, 3b, 4a, 4b, 4c) can be displayed superimposed.

2. The radio network (1) according to claim 1, wherein each second radio client (3a, 3b, 4a, 4b, 4c) is configured in such a way that it can be switched from a communication mode into the diagnostic mode and back again into the communication mode, wherein each second radio client (3a, 3b, 4a, 4b, 4c) in the communication mode can communicate with radio clients (2, 3a, 3b, 4a, 4b, 4c), and in the diagnostic mode the communication with other radio clients (2, 3a, 3b, 4a, 4b, 4c) is suspended.

3. The radio network (1) according to claim 2, wherein each second radio client (3a, 3b, 4a, 4b, 4c) is configured in such a way that it switches from the diagnostic mode into the communication mode and back after a predefined period of time.

4. The radio network (1) according to any one of the preceding claims, wherein each second radio client (3a, 3b, 4a, 4b, 4c) is configured in such a way that the at least two channels are run through a number of times in the diagnostic mode.

5. The radio network (1) according to any one of the preceding claims, wherein the measurement signal is a Receive Signal Strength Indicator signal (RSSI signal).

6. The radio network (1) according to claim 2, configured in such a way that each second radio client (3a, 3b, 4a, 4b, 4c) switches into the communication mode and in the communication mode communicates the measurement signals to the first radio client (2).

7. The radio network (1) according to any one of the preceding claims, wherein the first radio client (2) and/or at least one second radio client (3a, 3b, 4a, 4b, 4c) has an interface (5), via which the received measurement signals can be tapped.

8. The radio network (1) according to any one of the preceding claims, wherein the first radio client (2) is a master client and each second radio client (3a, 3b, 4a, 4b, 4c) is a repeater slave client or a slave client.

9. The radio network (1) according to any one of the preceding claims, wherein the radio network (1) is structured in the form of a tree structure.

10. A method for measuring signal strengths of a radio wave in a frequency band in a radio network (1), comprising a first radio client (2) and a plurality of second radio clients (3a, 3b, 4a, 4b, 4c), wherein the first radio client (2) and each second radio client (3a, 3b, 4a, 4b, 4c) can communicate with one another within a frequency band on at least two channels by means of radio waves, wherein each second radio client (3a, 3b, 4a, 4b, 4c) can be switched into a diagnostic mode, wherein in the diagnostic mode the second radio client (3a, 3b, 4a, 4b, 4c) runs through at least two channels within the frequency band and receives a measurement signal on the respective channels, wherein the measurement signal reflects the strength of a radio wave received from the second radio client (3a, 3b, 4a, 4b, 4c), **characterised in that**
each second radio client (3a, 3b, 4a, 4b, 4c) communicates the received frequency-dependent measurement signals to the first radio client (2),
the first radio client (2) comprises a display unit (6), and the frequency-dependent measurement signals of the second radio clients (3a, 3b, 4a, 4b, 4c) can be displayed by means of the display unit (6), wherein
measurement signals of different second radio clients (3a, 3b, 4a, 4b, 4c) are displayed superimposed.

11. The method according to claim 10, wherein each second radio client (3a, 3b, 4a, 4b, 4c) switches from a communication mode into the diagnostic mode and back again into the communication mode, wherein each second radio client (3a, 3b, 4a, 4b, 4c) in the communication mode communicates with radio clients (2, 3a, 3b, 4a, 4b, 4c), and in the diagnostic mode the communication with other radio clients (2, 3a, 3b, 4a, 4b, 4c) is suspended.

12. The method according to claim 11, wherein each second radio client (3a, 3b, 4a, 4b, 4c) switches from the diagnostic mode into the communication mode and back after a predefined period of time.

13. The method according to any one of claims 10 to 13, wherein each second radio client (3a, 3b, 4a, 4b, 4c) runs through the two channels a number of times in the diagnostic mode.

14. The method according to claim 11, wherein each second radio client (3a, 3b, 4a, 4b, 4c) switches into the communication mode and in the communication mode communicates the measurement signals to the first radio client (2).

## Revendications

1. Réseau radio (1) comprenant un premier dispositif utilisateur radio (2) et une multiplicité de deuxièmes dispositifs utilisateurs radio (3a, 3b, 4a, 4b, 4c), où le premier dispositif utilisateur radio (2) et chaque deuxième dispositif utilisateur radio (3a, 3b, 4a, 4b, 4c) peuvent communiquer ensemble dans une bande de fréquences sur au moins deux canaux au moyen d'ondes radio, où chaque deuxième dispositif utilisateur radio (3a, 3b, 4a, 4b, 4c) est installé de telle manière que celui-ci peut être commuté dans un mode de diagnostic, où, dans le mode de diagnostic, le deuxième dispositif utilisateur radio (3a, 3b, 4a, 4b, 4c) passe à travers au moins deux canaux à l'intérieur de la bande de fréquences, et capte un signal de mesure sur un canal respectif, où le signal de mesure reproduit la puissance d'une onde radio reçue par le deuxième dispositif utilisateur radio (3a, 3b, 4a, 4b, 4c),
**caractérisé en ce que**
le réseau radio(1) est installé de telle manière que chaque deuxième dispositif utilisateur radio (3a, 3b, 4a, 4b, 4c) communique les signaux de mesure dépendants de la fréquence réceptionnés au premier dispositif utilisateur radio (2),
le premier dispositif utilisateur radio (2) présente une unité d'affichage (6), où les signaux de mesure dépendants de la fréquence du deuxième dispositif utilisateur radio (3a, 3b, 4a, 4b, 4c) peuvent être représentés au moyen de l'unité d'affichage (6), et
le premier dispositif utilisateur radio (2) est installé de telle manière que les signaux de mesure de divers deuxièmes dispositifs utilisateurs radio (3a, 3b, 4a, 4b, 4c) peuvent être représentés superposés.

2. Réseau radio (1) selon la revendication 1, dans lequel chaque deuxième dispositif utilisateur radio (3a, 3b, 4a, 4b, 4c) est installé de telle manière qu'il peut être commuté d'un mode de communication dans le mode de diagnostic, et de nouveau en sens inverse dans le mode de communication, où chaque deuxième dispositif utilisateur radio (3a, 3b, 4a, 4b, 4c) peut communiquer dans le mode de communication avec des dispositifs utilisateurs radio (2, 3a, 3b, 4a, 4b, 4c), et la communication avec d'autres dispositifs utilisateurs radio (2, 3a, 3b, 4a, 4b, 4c) est interrompue dans le mode diagnostic.

3. Réseau radio (1) selon la revendication 2, dans lequel chaque deuxième dispositif utilisateur radio (3a, 3b, 4a, 4b, 4c) est installé de telle manière qu'il commute de nouveau du mode diagnostic dans le mode de communication après le déroulement d'un temps fixé.

4. Réseau radio (1) selon l'une des revendications précédentes, dans lequel chaque deuxième dispositif utilisateur radio (3a, 3b, 4a, 4b, 4c) est installé de telle manière que, dans le mode diagnostic, les au moins deux canaux sont traversés plusieurs fois.

5. Réseau radio (1) selon l'une des revendications précédentes, dans lequel le signal de mesure est un signal indicateur de la puissance d'un signal reçu, RSSI.

6. Réseau radio (1) selon la revendication 2, installé de telle manière que chaque deuxième dispositif utilisateur radio (3a, 3b, 4a, 4b, 4c) commute dans le mode de communication et communique les signaux de mesure au premier dispositif utilisateur radio (2) dans le mode de communication.

7. Réseau radio (1) selon l'une des revendications précédentes, dans lequel le premier dispositif utilisateur radio (2), et/ou au moins un deuxième dispositif utilisateur radio (3a, 3b, 4a, 4b, 4c), présente une interface (5) par laquelle les signaux de mesure reçus peuvent être captés.

8. Réseau radio (1) selon l'une des revendications précédentes, dans lequel le premier dispositif utilisateur radio (2) est un dispositif utilisateur maitre et chaque deuxième dispositif utilisateur radio (3a, 3b, 4a, 4b, 4c) est un dispositif utilisateur esclave de répétition ou un dispositif utilisateur esclave.

9. Réseau radio (1) selon l'une des revendications précédentes, où le réseau radio (1) est structuré sous la forme d'une structure en arbre.

10. Procédé de mesure de la puissance de signaux d'une onde radio dans une bande de fréquences dans un réseau radio (1), comprenant un premier dispositif utilisateur radio (2) et multiplicité de deuxièmes dispositifs utilisateurs radio (3a, 3b, 4a, 4b, 4c), où le dispositif premier utilisateur radio (2) et chaque deuxième dispositif utilisateur radio (3a, 3b, 4a, 4b, 4c) peuvent communiquer ensemble dans une bande de fréquences sur au moins deux canaux au moyen d'ondes radio, où chaque deuxième dispositif utilisateur radio (3a, 3b, 4a, 4b, 4c) peut être commuté dans un mode de diagnostic, où, dans le mode de diagnostic, le deuxième dispositif utilisateur radio (3a, 3b, 4a, 4b, 4c) passe à travers au moins deux canaux à l'intérieur de la bande de fréquences, et capte un signal de mesure sur un canal respectif, où le signal de mesure reproduit la puissance d'une onde radio reçue par le deuxième dispositif utilisateur radio (3a, 3b, 4a, 4b, 4c),
**caractérisé en ce que**
chaque deuxième dispositif utilisateur radio (3a, 3b, 4a, 4b, 4c) communique les signaux de mesure dépendants de la fréquence réceptionnés au premier dispositif utilisateur radio (2),
le premier dispositif utilisateur radio (2) présente une unité d'affichage (6), et les signaux de mesure dépendants de la fréquence du deuxième dispositif utilisateur radio (3a, 3b, 4a, 4b, 4c) peuvent être représentés au moyen de l'unité d'affichage (6),
où des signaux de mesure de divers deuxièmes dispositifs utilisateurs radio (3a, 3b, 4a, 4b, 4c) peuvent être représentés superposés.

11. Procédé selon la revendication 10, dans lequel chaque deuxième dispositif utilisateur radio (3a, 3b, 4a, 4b, 4c) commute d'un mode de communication dans le mode de diagnostic, et de nouveau en sens inverse dans le mode de communication, où chaque deuxième utilisateur radio (3a, 3b, 4a, 4b, 4c) communique dans le mode de communication avec des dispositifs utilisateurs radio (2, 3a, 3b, 4a, 4b, 4c), et la communication avec d'autres dispositifs utilisateurs radio (2, 3a, 3b, 4a, 4b, 4c) est interrompue dans le mode diagnostic.

12. Procédé selon la revendication 11, dans lequel chaque deuxième dispositif utilisateur radio (3a, 3b, 4a, 4b, 4c) commute de nouveau du mode diagnostic vers le mode de communication après le déroulement d'un temps fixe.

13. Procédé selon l'une des revendications 10 à 13, dans lequel chaque deuxième dispositif utilisateur radio (3a, 3b, 4a, 4b, 4c) passe à travers les deux canaux plusieurs fois dans le mode de diagnostic.

14. Procédé selon la revendication 11, dans lequel chaque deuxième dispositif utilisateur radio (3a, 3b, 4a, 4b, 4c) commute dans le mode de communication et communique les signaux de mesure au premier dispositif utilisateur radio (2) dans le mode de communication.
